# FASCICULE DE BREVET EUROPEEN

(11) **EP 2 258 096 B1**
(45) Date de publication et mention de la délivrance du brevet: **28.09.2016**
(21) Numéro de dépôt: 09727099.5
(22) Date de dépôt: 13.03.2009
(51) Int. Cl.: H04L 29/06

(54) **PROCÉDÉ DE ROUTAGE DE DONNÉES D'UN FLUX DE COMMUNICATION**
VERFAHREN ZUM ROUTEN VON DATEN IN EINEM KOMMUNIKATIONSFLUSS
METHOD FOR ROUTING DATA IN A COMMUNICATION FLOW

(30) Priorité: 14.03.2008 FR 0851693
(43) Date de publication de la demande: 08.12.2010
(73) Titulaire: Orange, 75015 Paris (FR)
(72) Inventeur: BERTIN, Philippe, F-35690 Acigne (FR); BONJOUR, Servane, F-35690 Acigne (FR)
(74) Mandataire: Vidon Brevets & Stratégie
(86) Numéro de dépôt international: PCT/FR2009/050422
(87) Numéro de publication internationale: WO 2009/122074

(56) Documents cités:
- EP-A- 1 845 681
- JOHNSON RICE UNIVERSITY C PERKINS NOKIA RESEARCH CENTER J ARKKO ERICSSON D: "Mobility Support in IPv6; rfc3775.txt" IETF STANDARD, INTERNET ENGINEERING TASK FORCE, IETF, CH, 1 juin 2004 (2004-06-01), XP015009555 ISSN: 0000-0003

## Description

### 1. DOMAINE DE L'INVENTION

La présente invention se rapporte au domaine des communications dans un réseau mobile.

La présente invention se rapporte plus particulièrement à la mise en oeuvre d'un routage de flux de communication au sein de tels réseaux de communication mobiles.

Au sein de réseaux de communication mobiles, également appelés réseaux de communication sans fils, de nombreux mécanismes sont mis en oeuvre pour permettre à des terminaux mobiles, également appelés noeuds mobiles, de communiquer, par exemple avec des entités se trouvant dans des réseaux à commutation de paquets. De telles entités peuvent par exemple être des serveurs du réseau Internet. Ainsi, chaque technologie sans fil dispose de ses propres mécanismes et de ses propres normes d'accès. Par exemple, dans le cas de la technologie dénommée « WiMax », des stations de bases sont connectées à une entité dite « ASNGW » (de l'anglais « *Access Service Network Gateway* » pour « Passerelle d'Accès Au Service Réseau »). Ces passerelles se connectent directement au niveau d'un réseau à commutation de paquets tel qu'un réseau IP et sont dépendantes, pour bon nombre de services, d'une entité de gestion et de concentration de trafic centralisée dans le réseau coeur.

Dans la norme UMTS (« *Universal Mobile Terrestrial System »)* normalisée par le 3GPP (« *Third Generation Partnership Project* »), les stations de base sont connectées à des équipements de type RNC (de l'anglais *« Radio Network Controler* » pour « Contrôleur de Réseau Radio »). Ces RNC sont des éléments du réseau qui contrôlent les transmissions radio des stations de base. Ils sont eux-mêmes connectés à d'autres équipements (SGSN, GGSN) avant de pouvoir atteindre le réseau de paquet qui contient un « *Home Agent* » permettant au terminal mobile (initiateur) de se connecter au réseau de paquet.

Pour la prochaine génération de réseaux d'accès mobiles, le 3GPP normalise actuellement une nouvelle architecture d'accès où les stations de bases appelées "eNodeB" sont connectées sur un réseau paquet interconnecté au réseau coeur à travers des passerelles spécifiques MME/UPE (« *Mobility Management Entity* »/« *User Plane Entity* »). Ces passerelles sont fonctionnellement proches des entités SGSN des réseaux existants.

### 2. ART ANTERIEUR

Dans les architectures centralisées précédemment évoquées, une entité centrale du réseau mobile à commutation de paquets gère l'attribution d'adresses et la transmission de flux de communication entre le réseau de paquet et le terminal mobile en fonction de sa localisation courante. Cette approche centralisée est supportée par exemple à travers la fonction GGSN dans les réseaux 3G (avec le support des SGSN) et une entité appelée « Home Agent » dans les standards de mobilité IP. L'entité *« Home Agent* » est nommée également « Agent Mère » par la suite.

Dans un premier temps, préalablement à la mise en oeuvre de fonctions de routage, l'agent mère est en charge de l'attribution d'une adresse permanente et globale au terminal mobile qui vient de se connecter au réseau mobile.

Dans un second temps, l'agent mère est chargé de router les paquets entre le terminal mobile et d'autres entités (par exemple des serveurs, situés au sein d'un réseau coeur, tel qu'Internet) auxquelles le terminal mobile accède par exemple pour établir une communication téléphonique ou visiophonique ou encore pour télécharger des données ou lire en continu (en « streaming » en anglais) des données multimédia (musiques, vidéo).

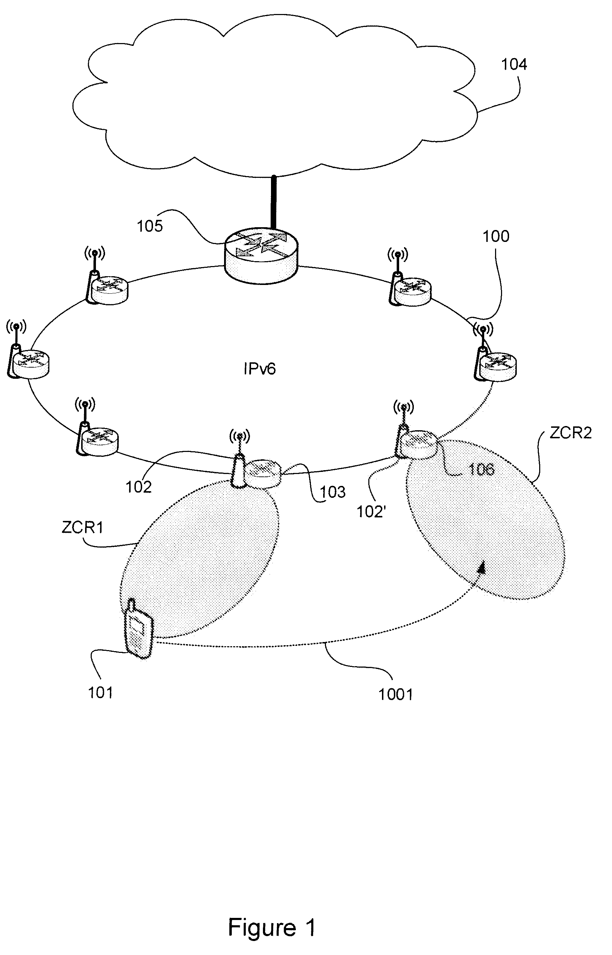

Par exemple, comme cela est décrit en relation avec la figure 1, dans le cas d'une mise en oeuvre du protocole «MIP» (de l'anglais «Mobile Internet Protocol » pour «Protocole Internet Mobile»), un terminal mobile 101 se connecte à un réseau mobile 100 par l'intermédiaire d'une station de base 102 laquelle est connectée à un routeur d'accès AR 103 (en anglais «Access Router »). Le routeur d'accès AR 103 comprend une interface d'accès au réseau d'accès mobile à commutation de paquets 100 (fonctionnant à l'aide du protocole IP en tant que protocole de la couche transport). Au sein de ce réseau se trouve un agent mère 105 qui se charge de la gestion centralisée de noeuds mobiles s'interconnectant avec le réseau d'accès mobile à commutation de paquets 100 et le réseau coeur (tel que le réseau Internet) 104.

Dans cette architecture, quand un terminal mobile 101 se connecte au réseau 100, l'agent mère 105 fournit une première adresse globale permanente au terminal mobile. Cependant, le terminal mobile ne peut pas utiliser cette adresse directement. Pour qu'il puisse transmettre et recevoir des données des flux de communication, le routeur d'accès AR 103 délivre également au terminal mobile une adresse temporaire dite « *Care of Address »* qui permet au terminal mobile de dialoguer avec le routeur d'accès AR 103. Pour que le terminal mobile puisse recevoir des données en provenance d'un serveur, ces données transitent par l'agent mère 105 qui créé un tunnel avec le routeur d'accès AR 103 pour que les paquets à destination et en provenance du terminal mobile 101 puissent atteindre leurs destinations.

Lorsque le terminal mobile 101 se déplace (1001) d'une zone d'accès radio ZCR1 à une zone d'accès radio ZCR2 et change de station de base et de routeur d'accès il reçoit alors de la part de ce deuxième routeur d'accès 106 une nouvelle adresse temporaire et un nouveau tunnel est créé avec l'agent mère 105 et le nouveau routeur d'accès 106. Ce mécanisme requiert l'utilisation de mécanismes de signalisation spécifiques visant à transmettre la nouvelle adresse temporaire au « Home Agent » afin que celui-ci mette à jour sa table d'association dans laquelle il enregistre la correspondance entre adresse permanente et temporaire de chaque terminal mobile.

La demande de brevet EP1845681 décrit une méthode de transmission de données entre un premier point d'accès et un deuxième point d'accès lorsqu'un terminal mobile est connecté tour à tour de ce premier point d'accès à ce second point d'accès. Cette demande de brevet propose de mettre en oeuvre un tunnel entre le premier point d'accès et le deuxième point d'accès pour maintenir les connexions existantes entre le premier point d'accès et le terminal mobile. La méthode proposée par ce document EP1845681 présente l'inconvénient de devoir faire passer l'intégralité des connexions existantes au travers du deuxième point d'accès, sans se soucier de l'opportunité d'un tel routage.

Le document RFC3775 intitulé « *Mobility Support in IPv6* » publié par l'IETF, spécifie un protocole qui permet aux noeuds d'un réseau IPv6 de rester accessibles tout en étant en situation de mobilité. Selon ce document, chaque noeud mobile est toujours identifié par son adresse de résidence, indépendamment de son point de rattachement au réseau. Pour ce faire, une entité centrale (« home-agent ») est utilisée pour réaliser la gestion de la mobilité des terminaux mobiles. La méthode proposée par ce document RFC3775 présente l'inconvénient de devoir recourir à une architecture centralisée pour la gestion des noeuds mobiles.

Ces solutions de mobilité de l'art antérieur posent des problèmes de gestion des adresses et des flux de communication encapsulés. En effet, outre le fait que la gestion des adresses est centralisée, par exemple au niveau de l'agent mère, et donc potentiellement sujette à des problèmes de gestion de charge de traitement et de délais d'échanges de signalisation, ces éléments centralisés provoquent des goulots d'étranglement pour le trafic des noeuds mobiles ce qui entraîne une baisse des performances.

Ces éléments centralisés doivent posséder des capacités de traitement très importantes qui leur permettent de gérer les contextes de milliers de mobiles simultanément. Un contexte d'un terminal mobile peut être défini comme étant un ensemble de données comprenant entre autres des adresses IP attribuées au terminal mobile, un identifiant du terminal mobile, des identifiants des stations de base auxquelles le terminal mobile est connecté ou sur le point de l'être, des matériels de sécurités (clés privées, clés publiques, etc.).

### 3. RESUME DE L'INVENTION

La solution proposée par l'invention ne présente pas ces inconvénients de l'art antérieur. Elle concerne en effet un procédé de routage de données d'un flux de communication, lesdites données étant échangées entre un terminal mobile d'un réseau de communication mobile à commutation de paquets et une entité distante. Selon l'invention, un tel procédé comprend :
- une première étape d'attachement dudit terminal mobile, pour ledit flux de communication, à un premier point d'accès radio dudit réseau de communication mobile, dit noeud d'accès ancre ;
- une étape d'acquisition, par ledit terminal mobile, d'une adresse globale de niveau réseau en fonction d'un préfixe d'adresse dudit noeud d'accès ancre ;
- une deuxième étape d'attachement dudit terminal mobile à un deuxième point d'accès radio dudit réseau de communication mobile, dit noeud d'accès visité courant, en fonction d'un critère d'attachement prédéterminé ; et
- une étape de routage, par ledit noeud d'accès visité courant, de données dudit flux de communication émises vers ladite entité distante par ledit terminal mobile en utilisant ladite adresse globale préalablement acquise.

Ainsi, dans un réseau de communication mobile, l'invention permet de ne pas avoir à utiliser les services d'une entité centralisée de gestion des terminaux mobile. En effet, dans les protocoles actuels de gestion de la mobilité des terminaux, une entité spécifique centralisée, telle qu'un « Home Agent »), est en charge de l'attribution des adresses aux terminaux mobiles et du maintien de la localisation des terminaux au sein du réseau.

L'invention permet de ne pas faire appel à une telle entité centralisée, mais d'utiliser à la place, dans un réseau mobile, les services d'un noeud d'accès à ce réseau mobile pour fournir l'adresse globale du terminal et router les données lorsque les conditions de réception dans le terminal mobile évoluent, par exemple lorsque le terminal est en situation de mobilité ou qu'un nouveau point d'accès radio utilisant une technologie d'accès radio différente offre de nouvelles possibilités de connexion au terminal. En effet, selon l'invention, le terminal mobile peut être connecté simultanément à plusieurs noeuds d'accès qui mettent chacun en oeuvre plusieurs technologies d'accès radio différentes (par exemple WiMax, WiFi, GSM, UMTS). Le noeud d'accès ancre, c'est-à-dire le noeud sur lequel le flux a été initialisé, peut décider d'utiliser un noeud d'accès visité en fonction du flux à transmettre. La deuxième étape d'attachement peut donc avoir lieu alors même que le terminal n'est pas en situation de mobilité.

Selon une caractéristique particulière de l'invention, ledit procédé comprend, postérieurement à ladite deuxième étape d'attachement :
- une étape d'émission par ledit terminal mobile, d'au moins un paquet de données adressé à ladite entité distante, ledit paquet de données, dit paquet de mise à jour, déclenchant une mise à jour dudit attachement dudit terminal mobile auprès dudit noeud d'accès ancre ; et
- une étape de routage, par ledit noeud d'accès visité courant, dudit au moins un paquet de mise à jour, vers ledit au moins un noeud d'accès ancre.

Ainsi, l'invention permet d'utiliser un noeud d'accès visité courant pour pouvoir router des données des flux de communication normalement routées à travers un noeud d'accès ancre précédent. L'invention permet donc de se passer complètement des « agents mères» pour les opérations de routage des données. De plus l'utilisation d'un noeud d'accès visité courant pour transférer des données à un noeud d'accès ancre assure que les données qui étaient originellement destinées à être routées vers un noeud d'accès ancre seront tout de même transmises au terminal mobile.

Selon un aspect particulier de l'invention, ladite étape de routage dudit au moins un paquet de mise à jour comprend :
- une étape de réception, par ledit noeud d'accès visité courant, dudit au moins un paquet de mise à jour ;
- une étape d'analyse d'un préfixe d'une adresse d'émission dudit au moins un paquet de mise à jour ; et
- lorsque ledit préfixe de ladite adresse d'émission ne correspond pas à un préfixe d'adresse dudit noeud d'accès visité courant, une étape d'expédition dudit paquet de mise à jour vers ledit noeud d'accès ancre en encapsulant ledit paquet de mise à jour dans un paquet de transit.

Ainsi à la différence des techniques de l'art antérieur dans le domaine de la mobilité, l'invention permet à un noeud d'accès visité courant, de ne pas se défausser d'un paquet qui ne lui est pas destiné. En effet, dans les protocoles de l'art antérieur, quand une station de base reçoit un paquet qui porte une adresse IP qui ne correspond pas à l'adresse attendue par le noeud d'accès, celui-ci se contente de s'en débarrasser (« *discard* » en anglais). L'invention ne prévoit pas ce type de procédure et permet ainsi au noeud d'accès visité courant de faire suivre le paquet au noeud d'accès ancre en l'encapsulant dans un paquet qui est utilisé pour le transit entre le noeud d'accès visité courant et le noeud d'accès ancre. Ainsi le paquet qui sert à la mise à jour n'est pas perdu et le noeud d'accès ancre le reçoit.

Selon une caractéristique particulière de l'invention, ledit procédé comprend une étape de transmission de données en provenance de ladite entité distante, dites données descendantes, dudit noeud d'accès ancre vers ledit noeud d'accès visité courant en fonction dudit paquet de transit.

Selon un aspect particulier de l'invention, ladite étape de transmission comprend, au niveau dudit noeud d'accès ancre :
- une étape de réception dudit paquet de transit en provenance dudit noeud d'accès visité courant ;
- une étape de mise à jour d'un contexte de transmission dudit flux de communication en fonction d'un préfixe d'adresse dudit noeud d'accès visité courant disponible au sein dudit paquet de transit ; et
- une étape de reroutage desdites données descendantes vers ledit noeud d'accès visité courant tant que de telles données doivent être transmises, en fonction dudit contexte de transmission dudit flux.

Ainsi, l'invention permet d'avertir le noeud d'accès ancre que le terminal mobile est désormais attaché à un noeud d'accès courant et de faire en sorte que le noeud d'accès ne se défausse pas des paquets destinés au terminal mobile. Au contraire, l'invention permet de faire en sorte que ces paquets soient transmis au terminal même en l'absence d'entité centralisée (« Agent Mère»). En effet, quand de tels paquets atteignent le noeud d'accès ancre, celui-ci, ayant mis son contexte de transmission à jour grâce à la réception du paquet de mise à jour, transmet les paquets vers le noeud d'accès visité, par exemple sous la forme d'une encapsulation de paquet.

Une telle transmission des données est réalisée tant que des données sont à transmettre. Ainsi, lorsque le flux de communication se termine (par exemple en cas de fin d'une communication mobile), il n'y a plus de routage vers le noeud d'accès visité.

Selon une caractéristique particulière de l'invention, ledit contexte de transmission dudit flux de communication comprend au moins une information de qualité de service relative à une interface radio utilisée pour transmettre au moins une partie desdites données composantes dudit flux de communication.

Ainsi, lorsque le noeud d'accès ancre dispose de plusieurs possibilités de routage des données composantes du flux de communication, il est à même de choisir l'interface radio qui sera utilisée pour le routage en fonction du contexte de transmission du flux. Par exemple, si le flux de communication est un flux de parole (conversation téléphonique), le noeud d'accès ancre pourra utiliser un noeud d'accès visité auquel le terminal est connecté qui gère efficacement les contraintes de qualité de service liées aux conversations téléphoniques.

Selon un aspect particulier de l'invention, lesdits noeuds d'accès dudit réseau de communication mobile forment un réseau mobile à commutation de paquets basé sur le protocole IP en version 6 et en ce que ladite adresse globale est une adresse IPv6.

Ainsi, l'invention permet d'attribuer de manière simple et globale des adresses qui peuvent être utilisées par un terminal indépendamment du noeud d'accès auquel il est attaché.

Selon une caractéristique particulière de l'invention, ledit critère d'attachement prédéterminé appartient au groupe comprenant au moins :
- une évolution de conditions de réception dans ledit terminal mobile ;
- un niveau de charge de la batterie dudit terminal mobile ;
- un besoin spécifique exprimé par une application logicielle dudit terminal mobile ;
- une situation de mobilité ;
- une décision d'un utilisateur dudit terminal mobile ;
- un niveau de signal reçu ;
- un taux d'erreur de transmission ; et
- un taux de retransmission de groupe de données (trames et/ou paquet).

Un autre mode de réalisation de l'invention concerne un noeud d'accès radio d'un réseau de communication mobile. Selon l'invention, un tel noeud d'accès comprend :
- des moyens d'attachement d'au moins un terminal mobile ; et
- des moyens de routage de données d'un flux de communication entre une entité distante et ledit terminal mobile en utilisant une adresse globale préalablement construite par ledit terminal mobile en utilisant un préfixe d'adresse d'un noeud d'accès radio auquel le terminal mobile s'est précédemment attaché, dit noeud d'accès ancre et auprès duquel ledit flux de communication a été initialisé.

Ainsi, un tel noeud d'accès permet de ne pas perdre de données destinées à un terminal qui a initialisé un flux sur ce noeud d'accès mais qui s'est par la suite attaché à un autre noeud d'accès.

Selon un mode de réalisation particulier de l'invention, ledit noeud comprend des moyens de routage d'un paquet de mise à jour à destination dudit noeud d'accès ancre.

Ainsi, un tel noeud permet de transmettre des paquets de données du flux de communication à d'autres noeuds d'accès précédemment utilisés.

Selon un aspect particulier de l'invention, ledit noeud d'accès comprend :
- des moyens de réception d'un paquet de transit en provenance d'un noeud d'accès visité courant auquel ledit terminal mobile est attaché ;
- des moyens de mise à jour d'un contexte de transmission dudit flux de communication en fonction d'un préfixe d'adresse dudit noeud d'accès visité courant disponible au sein dudit paquet de transit ; et
- des moyens de reroutage de données en provenance de ladite entité distante vers ledit noeud d'accès visité courant tant que de telles données doivent être transmises, en fonction dudit contexte de transmission dudit flux.

Un autre mode de réalisation de l'invention concerne un réseau de communication mobile. Selon l'invention, un tel réseau de communication comprend au moins un noeud d'accès radio tel que décrit précédemment.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de routage tel que décrit précédemment, lorsqu'il est exécuté sur un ordinateur.

Un autre aspect de l'invention concerne un terminal mobile. Selon l'invention, un tel terminal mobile comprend des moyens pour :
- échanger avec un noeud d'accès, dit noeud d'accès ancre, d'un réseau de communication mobile à commutation de paquets, au travers d'une première interface radio dudit terminal mobile, des données constituant au moins une première composante d'au moins un flux de communication qui a été initialisé auprès dudit noeud d'accès ancre, et
- échanger avec un deuxième noeud d'accès, dit noeud d'accès visité courant, dudit réseau de communication mobile, distinct dudit noeud d'accès ancre, au travers d'une deuxième interface radio dudit terminal mobile, distincte de ladite première interface radio, des données constituant au moins une deuxième composante dudit flux de communication, distincte de ladite première composante,
lesdits échanges de données avec le noeud d'accès ancre et avec le noeud d'accès visité courant étant mis en oeuvre simultanément et en utilisant l'adresse globale du noeud d'accès ancre.

Ainsi, un terminal selon l'invention peut émettre et recevoir des données en utilisant simultanément plusieurs interfaces radio pour lesquelles il a obtenu, le cas échéant, plusieurs adresses globales au niveau des noeuds d'accès ancre avec lesquels les flux on été initialisés, même quand le terminal n'est effectivement plus connecté à ces noeuds d'accès ancre initiaux.

### 4. LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée, décrit un réseau de communication mobile usuel. ;
- la figure 2 illustre un premier mode de routage de données dans un mode de réalisation de l'invention ;
- la figure 3 illustre un deuxième mode de routage de données dans un mode de réalisation de l'invention ;
- la figure 4 illustre les modes de transmission de données dans le sens montant et dans le sens descendant.

### 5. DESCRIPTION DETAILLEE DE L'INVENTION

### 5.1 Rappel du principe de l'invention

Le principe général de l'invention consiste à gérer la mobilité pour chaque flux de communication et non pas pour un terminal. Un flux de communication comprend des données qui sont échangées entre le terminal mobile et une entité distante d'un réseau à commutation de paquets, tel qu'un serveur ou un autre terminal. L'entité distante peut être mobile ou fixe, localisée dans le domaine d'accès ou à l'extérieur de celui-ci (sur Internet par exemple).

Chaque flux de communication comprend des mécanismes pour l'identifier. Un mécanisme peut consister à utiliser un triplet {adresse source, adresse destination, identifiant de flux}. D'autres mécanismes peuvent être utilisés. Un flux de communication peut par exemple être une conversation téléphonique, visiophonique ou un téléchargement.

L'invention permet, dans un premier aspect, de mettre en oeuvre une gestion efficace de la mobilité dans une architecture dite « à plat » (par exemple celle présentée en figure 1), c'est-à-dire que l'invention permet d'éviter les désagréments des architectures centralisées de l'art antérieur tout en gérant efficacement la mobilité des terminaux. Une telle efficacité est possible selon l'invention grâce à la gestion de la mobilité des flux de communication en tant que tels et non pas seulement des terminaux. L'invention apporte donc une solution simple et efficace permettant de palier les problèmes liés à la centralisation. De plus l'invention permet le déploiement de réseaux de communication mobiles multi-technologies et l'utilisation simultanée de plusieurs technologies d'accès radio pour un même terminal.

Les avantages précités sont notamment rendus possibles par l'affectation d'une adresse globale au terminal lors de son attachement à un noeud d'accès. L'adresse est dite globale car le terminal peut l'utiliser pour établir des sessions de communication et de transmission de données à travers l'ensemble du réseau IP (ex: Internet).

En d'autres termes, l'adresse globale permet d'identifier le terminal mobile de manière unique dans le réseau de communication à commutation de paquets. Elle est, par exemple, déterminée à partir de données en possession du noeud d'accès (tels que des préfixes d'adressage). Le terminal acquiert cette adresse auprès du noeud d'accès auquel il s'attache ou peut construire cette adresse de lui-même en utilisant les préfixes d'adressage.

Un deuxième aspect de l'invention réside en ce que chaque flux de communication se voit attribuer un noeud d'accès ancre qui est en charge de gérer la mobilité du flux, facilitant par la même, la gestion du routage et limitant les goulots d'étranglement. Un noeud d'accès ancre est une entité d'accès radio du réseau à commutation de paquets. Il peut s'agir d'une station de base ou d'un routeur d'accès « AR » ou d'une entité combinant ces deux fonctions. Une fois le flux initialisé, le terminal mobile peut être amené à utiliser d'autres noeuds d'accès que son noeud d'accès ancre, mais le trafic associé au flux de communication initialisé sur le noeud d'accès ancre est toujours routé à travers ce noeud d'accès ancre.

Dans le sens montant (c'est-à-dire du terminal vers le réseau), c'est le noeud d'accès utilisé par le terminal (noeud d'accès visité) qui est en charge de router le trafic du flux de communication vers le noeud d'accès ancre. Dans le sens descendant, chaque paquet du flux est routé jusqu'au noeud d'accès ancre qui les transfère au terminal soit directement sur son interface radio soit à travers un noeud d'accès visité utilisable pour le flux.

Pour un flux de communication donné, le noeud d'accès ancre ne change pas au cours du temps, il est identifié grâce à l'adresse utilisée pour identifier le flux. Les noeuds utilisés par le flux pour la connectivité radio peuvent varier en fonction des déplacements du terminal ou des modifications de l'environnement radio.

Tout noeud d'accès peut être le noeud d'accès ancre d'un ou plusieurs flux tout en acceptant de simplement router les flux pour lesquels il n'est pas ancre.

Tout terminal mobile peut gérer plusieurs flux séquentiels ou simultanés, utilisant potentiellement différentes ancres. Chaque terminal gère lui-même sa propre mobilité, sous-jacente à la mobilité des flux. En fait le terminal gère sa connectivité dans l'environnement multi-accès, c'est-à-dire ses capacités à s'attacher au réseau à travers une ou plusieurs interfaces d'accès, afin d'être en mesure d'écouler ses flux de communications.

L'invention permet ainsi de gérer la mobilité des flux et non pas de gérer la mobilité des terminaux.

Par la suite, on présente notamment le cas d'une mise en oeuvre du procédé de l'invention en utilisant le protocole IPv6. Il est clair cependant que l'invention ne se limite pas à cette application particulière, mais peut également être mise en oeuvre en utilisant le protocole IPv4 et plus généralement dans tous les cas où un réseau de paquets est utilisé pour accéder à des entités qui fournissent des flux de communication.

### 5.2 Description d'un mode de réalisation

On présente dans ce mode de réalisation, la mise en oeuvre du procédé de l'invention en utilisant le protocole IPv6. (« Internet Protocol version 6 »). On considère que chaque flux est identifié par le triplet {adresse IPv6 source, adresse IPv6 destination, identifiant de flux}. Ces informations sont transportées dans l'entête des paquets IPv6.

Eventuellement, d'autres informations peuvent permettre d'identifier chaque flux. Lorsque l'identifiant de flux n'est pas renseigné ou ne peut pas être considéré comme fiable, on peut préférer utiliser les ports source et destination et type de protocole de transport, soit le quintuplet {adresse IPv6 source, adresse IPv6 destination, port source, port destination, type de protocole}. Dans la suite on se base cependant sur l'utilisation de l'identifiant de flux.

### 5.2.1 Architecture fonctionnelle

Dans ce mode de réalisation de l'invention, l'architecture d'accès considérée est la même que celle présentée en relation avec la figure 1 et qui repose sur l'utilisation des trois entités fonctionnelles suivantes :
- le terminal (101) ;
- le noeud d'accès (102+103) qui comprend un routeur d'accès et une station de base ;
- la passerelle d'accès (105).

Cette architecture permet de délimiter un domaine d'accès 100 défini comme l'ensemble des noeuds permettant de fournir un accès réseau à des terminaux multi-technologies en supportant le maintien de leurs communications en cours quels que soient leurs déplacements dans le domaine d'accès.

Le domaine d'accès est séparé du reste du réseau par une ou plusieurs passerelles d'accès 105. Il comprend des noeuds d'accès 103 en charge de fournir une connectivité aux terminaux 101. La connectivité désigne ce que le noeud d'accès offre comme type d'interface physique pour communiquer. Il peut s'agir d'une interface de type WiFi, WiMax, GSM, UMTS, par exemple. Les noeuds d'accès déployés dans un domaine donné peuvent ainsi implémenter des technologies différentes mais supportent une interface réseau unifiée basée sur IPv6 permettant de router efficacement les paquets des terminaux mobiles. Cela permet par exemple d'envisager des déploiements de noeuds d'accès cellulaires et de réseaux locaux sans fil (WLAN) dans le même domaine d'accès.

Le terminal 101 est un terminal de communications IPv6 qui intègre une ou plusieurs technologies d'accès. Il est en mesure de gérer plusieurs adresses IPv6. La connectivité de niveau 2 est assurée à travers ses différentes interfaces pour s'attacher alternativement ou simultanément aux noeuds d'accès (qui peuvent être de technologies différentes). A chaque attachement à un noeud d'accès, le terminal peut construire ou se faire allouer des adresses IPv6 du sous-réseau du noeud d'accès considéré.

Selon l'invention, le terminal 101 gère ses sessions de communication par flux. Chaque flux de communication est identifié par le triplet {adresse IPv6 source, adresse IPv6 destination, identifiant de flux}. Lorsque le terminal active un flux, celui-ci se voit implicitement alloué comme ancre le noeud d'accès courant correspondant au sous réseau IPv6 duquel l'adresse utilisée par le terminal est déduite.

Le noeud d'accès 103 est un noeud offrant la connectivité de niveaux 2 et 3 aux terminaux. C'est par exemple une station de base cellulaire intégrant une couche de routage IPv6, ou un point d'accès WiFi couplé à un routeur IPv6. Le noeud d'accès supporte les mécanismes nécessaires à l'authentification et au contrôle d'accès. Il permet l'allocation d'une ou plusieurs adresses IPv6 à chaque terminal.

Selon un troisième aspect de l'invention, ces adresses sont dérivées de son préfixe réseau, ce qui permet de lui router de manière non ambiguë les paquets des terminaux correspondants. Ainsi, pour chaque flux de communication, on distingue le noeud d'accès ancre des noeuds d'accès visités :
- le noeud d'accès d'ancre d'un flux est le noeud d'accès gérant la plage d'adresses IP de laquelle l'adresse utilisée par le flux est dérivée. Chaque terminal se déplaçant dans le réseau va initier des flux pouvant avoir des noeuds d'accès ancre différents.
- les noeuds d'accès visités sont des noeuds sur lequel le flux peut être émis ou reçu par le terminal lorsque celui-ci y est attaché (du fait de sa mobilité). Tout flux émis sur un noeud d'accès visité est nécessairement routé dans le réseau à travers le noeud d'accès ancre.

Chaque terminal peut utiliser plusieurs adresses IP allouées par différents noeuds d'accès. Les flux d'un même terminal pouvant être initialisés avec des adresses issues de différents noeuds d'accès peuvent avoir des noeuds d'accès ancres différents.

La passerelle d'accès 105 est une passerelle d'interconnexion entre le réseau d'accès et le réseau coeur (ou Internet). Cette passerelle 105 n'implémente pas de fonctions spécifiques liées à la mobilité des flux puisque celle-ci est entièrement prise en charge, selon l'invention, par les noeuds d'accès. On considère donc la passerelle comme un routeur d'interconnexion standard.

### 5.2.2 Procédures de gestion de mobilité

L'invention introduit deux niveaux de gestion de la mobilité :
- la mobilité du terminal est focalisée sur le maintien de la connectivité réseau du terminal, c'est-à-dire le maintien d'une connexion entre le terminal et le réseau à l'aide d'une interface de communication (WiFi, WiMax, UMTS, GSM, par exemple) ;
- la mobilité des flux permet le routage effectif des paquets correspondants à chaque flux quel que soit le noeud d'accès à travers la connectivité réseau du terminal.

En d'autres termes, la mobilité d'un flux est le fait que le flux soit routé vers le terminal :
- en fonction des attachements successifs de ce terminal à différents noeuds d'accès du réseau de communication mobile ;
- en utilisant toujours le noeud d'accès ancre avec lequel le flux a été initialisé comme point de routage central du flux.

La mobilité du flux est potentiellement mise en oeuvre en utilisant plusieurs interfaces de communication du terminal, par exemple l'interface WiFi dans un premier temps puis l'interface GSM dans un deuxième temps. Ainsi, un flux peut être initialisé en utilisant une interface WiFi du terminal et un point d'accès ancre WiFi. Le flux peut ensuite être routé du point d'accès ancre WiFi à un point d'accès visité courant WiMax quand le terminal réalise un attachement à ce point d'accès visité courant WiMax.

### 5.2.2.1 Mobilité du terminal

La mobilité du terminal est liée aux attachements du terminal aux noeuds d'accès. Le terminal peut gérer plusieurs attachements simultanés (un par interface active par exemple). Sur chaque attachement, le terminal gère la connectivité avec le noeud d'accès correspondant. Lorsqu'il se déplace ou lorsque l'environnement radio évolue (perte de connectivité sur une station de base, noeud d'accès surchargé, interférences...), le terminal peut être amené à modifier ses attachements au réseau en fonction d'un critère d'attachement prédéterminé. Il va par exemple basculer l'attachement de son interface cellulaire d'une station de base à une autre. Les changements d'attachements correspondent uniquement à des mécanismes de gestion de la connectivité réseau pour le terminal. Celui-ci ne se préoccupe pas à ce niveau de maintenir les sessions en cours mais bien de fournir à la couche réseau une connectivité permanente, quitte à changer de noeud d'accès et donc de sous-réseau IP. Le critère qui initie la modification de l'attachement peut être par exemple :
- une évolution de conditions de réception dans ledit terminal mobile, entraînant une mauvaise réception des données ;
- un niveau de charge de la batterie dudit terminal qui n'est plus suffisante pour utiliser l'interface radio précédente ;
- un besoin spécifique exprimé par une application logicielle dudit terminal, en termes de débit ou de qualité de service par exemple ;
- une situation de mobilité du terminal ;
- une décision d'un utilisateur dudit terminal pour profiter par exemple de services supplémentaires ;
- un niveau de signal reçu, trop faible pour transmettre un flux donné ;
- un taux d'erreur de transmission ;
- un taux de retransmission de groupe de données (trames et/ou paquet).

Lorsque le terminal est attaché à un noeud d'accès donné, il peut construire une adresse IPv6 issue du sous-réseau de ce noeud d'accès. L'adresse est construite suivant les mécanismes normalisés qui permettent deux modes d'allocation d'adresse (avec ou sans état). En plus de l'adresse construite sur le noeud d'accès donné, le terminal peut émettre et recevoir des paquets utilisant une adresse construite sur un autre noeud d'accès, qui reste valide tant que des flux de communication qui l'utilisent sont actifs.

Ainsi, lorsque le terminal se déplace d'un noeud d'accès à un autre :
- il peut créer de nouveaux flux de communication utilisant l'adresse construite sur le nouveau noeud d'accès ;
- il peut maintenir les flux en cours en continuant à émettre et recevoir des paquets IPv6 dont l'adresse a été préalablement déclarée sur un autre noeud d'accès.

Cette dernière possibilité, introduite par l'invention, ne correspond pas à un cas d'utilisation standard d'IPv6. Elle est permise afin que les flux préalablement créés puissent continuer à être écoulés lorsque le terminal change de noeud d'accès. Cela impacte uniquement le terminal et les noeuds d'accès car au-delà de l'interface radio, sur le réseau à commutation de paquets 100, les paquets ne correspondant pas au préfixe réseau du noeud d'accès utilisé sont transférés à travers le noeud d'accès correspondant à travers un mécanisme d'encapsulation, ce qui permet de masquer le mécanisme de mobilité au reste du réseau IPv6. Ce mécanisme de mobilité est décrit dans la suite et permet la gestion de la mobilité des flux.

### 5.2.2.1.1 Initialisation des flux

Il n'y a pas de signalisation explicite liée à l'établissement d'un flux. Comme cela a déjà été précisé, un flux est identifié par le triplet {adresse IPv6 source, adresse IPv6 destination, identifiant de flux}. Le flux est initialisé implicitement à l'émission d'un premier paquet correspondant à un triplet non encore utilisé. Il n'y a donc pas de signalisation explicite de début ni de signalisation explicite de fin de flux.

Les flux sont unidirectionnels, toute communication bidirectionnelle (appel de Voix sur IP par exemple) est donc nécessairement mappée sur un couple de flux, même si ceux-ci se basent sur les mêmes adresses et le même identifiant.

Selon l'invention, chaque flux utilise un noeud d'accès ancre qui est le noeud gérant le sous réseau correspondant à l'adresse IPv6 du terminal utilisé pour le flux.

En effet, le terminal s'est nécessairement attaché à un moment donné sur ce noeud d'accès afin de construire l'adresse IPv6 qui est ensuite utilisée pour le flux. Il s'agit d'une procédure d'attachement classique au cours de laquelle le terminal s'est vu attribuer une adresse globale qu'il peut librement utiliser en relation avec le noeud d'accès ancre. Cette adresse reste allouée au terminal tant qu'il est attaché à un noeud d'accès du réseau de communication et qu'au moins un flux utilise cette adresse. Ainsi, même si le terminal est en situation de mobilité et qu'il change de noeud d'accès, cette adresse continuera d'être utilisée pour les flux qui ont été initialisés en utilisant cette adresse.

Dans la plupart des cas, les premiers paquets de données d'un flux sont transmis via l'attachement du terminal mobile au noeud d'accès ancre. Cependant, cela n'est pas obligatoire, le terminal peut changer de noeud d'accès avant l'initialisation du flux. Cette situation est exceptionnelle pour un flux montant (du terminal vers le réseau) mais peut arriver de manière moins exceptionnelle pour les flux descendants.

Le routage des paquets de chaque flux s'effectue de manière standard entre le noeud d'accès ancre et le noeud correspondant. En effet, à ce niveau, le flux est transmis via des paquets IPv6 standard dont l'adresse source ou destination est une adresse acquise par le terminal lors d'un attachement au noeud d'accès ancre. Le traitement n'est adapté pour prendre en compte la mobilité et les changements d'attachements du terminal qu'entre celui-ci et le noeud d'accès ancre.

Le noeud d'accès ancre d'un flux n'identifie pas nécessairement chaque flux de communication mais se contente de router les paquets en fonction de leur adresse IPv6. De manière implicite, chaque noeud d'accès est le noeud ancre pour les flux utilisant une adresse IPv6 issue de sa plage d'adresse (i.e. ayant le préfixe du noeud d'accès).

Le noeud d'accès ancre tient à jour pour chaque adresse IPv6 issue de son préfixe la liste des noeuds d'accès utilisables, c'est-à-dire la liste des noeuds d'accès sur lesquels le terminal est attaché. Cette liste est mise à jour à chaque changement d'attachement du terminal. Pour les paquets descendants, lorsque la liste contient plusieurs noeuds d'accès, le noeud d'accès ancre doit être en mesure de choisir le noeud d'accès vers lequel router les paquets du flux.

### 5.2.2.2 Mobilité des flux

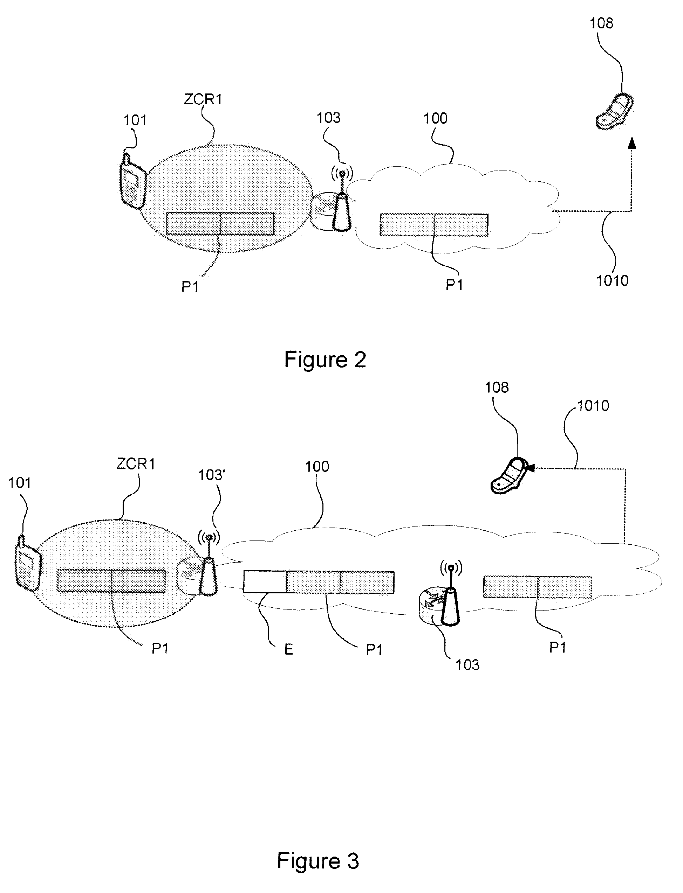

Les figures 2 et 3 illustrent des cas de mobilité des flux de communication.

La mobilité des flux est liée au routage des paquets IPv6 correspondants à chaque flux de communication. Lorsque le terminal doit gérer plusieurs attachements, les flux en cours doivent pouvoir être routés à travers les noeuds d'accès correspondants.

Selon l'invention, chaque flux IPv6 est attaché, de manière implicite, à un noeud d'accès ancre qui est le noeud d'accès qui possède le préfixe IPv6 duquel est dérivée l'adresse utilisée pour le flux. C'est généralement le noeud d'accès sur lequel le flux est initialisé. Tous les paquets d'un flux donné transitent nécessairement à travers le noeud d'accès ancre du flux.

Un flux peut être écoulé directement sur l'interface radio du noeud d'accès ancre tant que le terminal maintient un attachement direct à celui-ci. Cela est par exemple le cas de la figure 2. Le terminal 101 transmet un paquet P1 au noeud d'accès ancre 103 auquel le terminal 101 est attaché. Le noeud d'accès ancre 103 effectue le routage de ce paquet P1 au travers du domaine d'accès 100 puis ce paquet est transmis 1010 au terminal destinataire (dans un autre réseau ou dans le réseau du domaine d'accès). Dans ce cas il n'y a pas de mécanisme de mobilité mis en oeuvre au niveau IP puisque les paquets sont simplement routés suivant les mécanismes standards IPv6, quel que soit le sens de communication (descendant ou montant).

Par contre, lorsque le terminal 101 est attaché à d'autres noeuds d'accès 103' que le noeud ancre 103, comme cela est présenté en figure 3, les paquets P1 du flux peuvent être transférés à travers ces noeuds visités103'. Dans le sens descendant (du terminal 108 vers le réseau 100 puis vers le terminal 101), le noeud d'accès ancre 103 transfère les paquets P1 vers le noeud visité 103' en utilisant un mécanisme de tunnel (encapsulation à l'aide de l'entête E), le noeud d'accès visité 103' se charge ensuite de transmettre le paquet au terminal mobile 101 directement à travers son interface de niveau 2. Les paquets montants (du terminal 101 vers le réseau 100) sont émis du mobile 101 au noeud d'accès visité 103' qui les transfère au noeud d'accès ancre 103 à travers un tunnel IP. Le noeud d'accès ancre 103 peut alors les décapsuler avant de les router de manière standard, comme si les paquets P1 lui avaient été directement transmis par le mobile 101.

La correspondance entre un flux et un noeud d'accès peut être effectué paquet par paquet afin d'utiliser au mieux l'ensemble des ressources d'accès disponibles. Par exemple, un terminal multi-interfaces peut utiliser simultanément plusieurs de ses interfaces actives pour transmettre les paquets d'un même flux, ceux-ci transitant tous par le même noeud d'accès ancre.

Dans les exemples de la figure 2 et de la figure 3, les flux de communication sont à destination d'un terminal 108. Il est bien entendu que ce flux de communication peut être de nature quelconque et entre autre provenir d'un serveur ou être destiné à un serveur.

### 5.2.2.2.1 Routage d'un flux montant

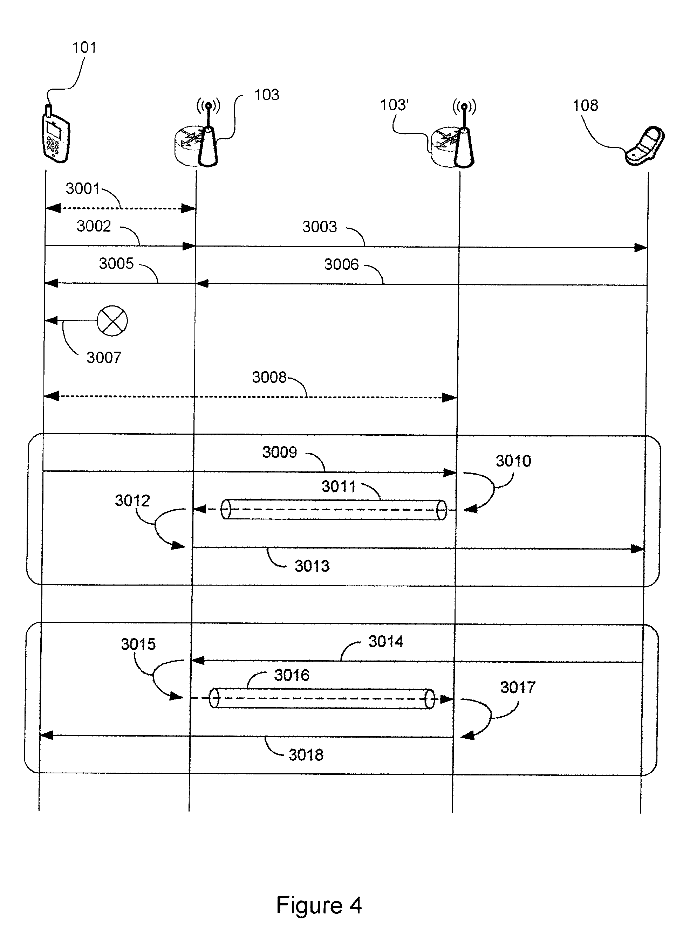

On présente plus précisément le routage d'un flux montant en relation avec la figure 4.

Dans un premier temps, le terminal 101 s'attache (3001) a un point d'accès ancre (103). Il débute une conversation téléphonique avec un terminal 108. Pour ce faire, il transmet (3002) des données sous forme de paquets. Ces données sont routées (3003) par le point d'accès ancre 103 vers le terminal 108. Dans le sens descendant, les données sont transmises (3006) par le terminal 108 et routées (3005) vers le terminal 101.

Le terminal 101 émet ses paquets IPv6 à destination de tout noeud correspondant en utilisant une adresse destination valide. A l'émission du paquet, le terminal sélectionne l'interface à utiliser (par exemple WiFi, WiMax, GSM) en fonction de paramètres qui lui sont propres (qualité radio, charge, préférences terminal, préférences transmises préalablement par le réseau) et émet le paquet IPv6 sur cette interface.

Lorsque le paquet est envoyé directement sur une interface du noeud d'accès ancre du flux, l'adresse source utilisée par le terminal est nécessairement issue du sous-réseau de ce noeud d'accès ancre. Le noeud d'accès ancre traite le paquet et le route de manière standard.

Lorsqu'une perte de connectivité se produit (3007) le terminal 101 s'attache à un nouveau noeud d'accès (103'). C'est le noeud d'accès visité. La perte de connectivité peut être due à la mobilité du terminal.

Quand le paquet est envoyé (3009) sur une interface de noeud d'accès visité (103'), l'adresse source du terminal 101 ne correspond pas à un préfixe valide pour le noeud d'accès visité 103' (elle correspond au préfixe pour le noeud d'accès ancre où le flux a été initialisé, comme présenté en 5.2.2.1.1).

Selon l'invention, le noeud d'accès visité 103' ne supprime pas le paquet mais le transmet (3010) au noeud d'accès ancre attaché au flux. Il le fait en utilisant un mécanisme de tunnel IP (3011), c'est-à-dire que le noeud d'accès encapsule le paquet dans un paquet IP à destination du noeud d'accès ancre 103.

Le noeud d'accès visité 103' déduit cette adresse de l'examen du préfixe de l'adresse source émise par le terminal mobile 101. Il réalise une analyse de l'adresse source utilisée par le terminal mobile. Le paquet encapsulé est ensuite routé (3011) à travers le domaine d'accès vers le noeud d'accès ancre 103, en utilisant un protocole de routage standard. A la réception du paquet IPv6, le noeud d'accès ancre 103 qui en est le destinataire l'analyse: il décapsule (3012) l'entête de tunnel IP et s'aperçoit que c'est un paquet émis par le terminal mobile 101. Si l'adresse source est valide (c'est-à-dire qu'elle a été au préalable activée par le terminal 101 sur ce noeud d'accès ancre 103), il route le paquet de manière standard (3013) afin qu'il parvienne au noeud correspondant (108).

### 5.2.2.2.2 Routage d'un flux descendant

On présente plus précisément le routage d'un flux descendant toujours en relation avec la figure 4.

Les flux descendant sont émis à destination du terminal 101 par un terminal 108 avec une adresse IPv6 valide dans le sous-réseau IP du noeud d'accès ancre 103 du flux.

Lorsqu'un paquet d'un flux descendant parvient (3014) au niveau du noeud d'accès ancre 103, celui-ci doit déterminer quel est le noeud d'accès parmi ceux sur lequel le terminal est attaché le plus pertinent pour transmettre le paquet. Le noeud d'accès ancre maintient la liste des noeuds d'accès visités sur lequel le terminal est connecté. Il dispose également des informations sur la qualité de service disponible sur chacun de ces noeuds d'accès visités.

Cette liste est maintenue par adresse IPv6, sachant que chaque terminal peut utiliser plusieurs adresses IPv6 issues ou non du même noeud d'accès. A partir de ces informations, le noeud d'accès ancre est en mesure de déterminer le noeud d'accès à utiliser qui sera soit lui-même (si le terminal y est encore connecté) soit un noeud d'accès visité :
- dans le premier cas, le noeud d'accès ancre doit transmettre le paquet directement au terminal mobile à travers son interface d'accès. Le paquet IPv6 est émis sur l'interface de niveau 2 à destination du terminal.
- dans le second cas, le noeud d'accès ancre 103 doit transmettre (3015) le paquet au noeud d'accès visité sélectionné. Le paquet est routé (3016) dans le réseau à travers un tunnel IP à destination du noeud visité. Au niveau du noeud d'accès visité 103', le paquet est décapsulé (3017) puis transféré (3018) au terminal mobile 101 à travers l'interface d'accès de niveau 2.

Le choix du noeud d'accès à utiliser dans la liste des noeuds d'accès peut se faire suivant différents critères comme par exemple des préférences de l'opérateur, des indicateurs de qualité radio, des indicateurs de charge réseau, un nombre de sauts nécessaires, des délais, les derniers paquets reçus...). Les critères utilisés et les algorithmes de choix dépendent des informations connues au niveau des noeuds d'accès. Eventuellement, ils peuvent s'appuyer sur une infrastructure et/ou des protocoles de signalisation ou des indicateurs spécifiques. Par défaut, le noeud d'accès ancre peut utiliser un algorithme de choix très simple visant à privilégier l'utilisation de sa propre interface d'accès si le terminal y est connecté et le noeud d'accès visité à travers lequel il a reçu le dernier paquet montant émis par le terminal dans le cas contraire.

### 5.2.2.2.3 Maintien de la liste des noeud d'accès par adresse IPv6

Tant que le terminal n'est atteignable qu'au travers du noeud d'accès ancre, il n'est pas nécessaire de mettre en oeuvre de mécanisme de mobilité particulier : les paquets du flux sont transmis par le noeud d'accès ancre au terminal directement à travers l'interface d'accès du noeud. Les mécanismes standards de routage des paquets IPv6 sont utilisés, comme dans tout réseau ne mettant pas en oeuvre de mécanisme de mobilité. Le contexte du terminal enregistré dans le noeud d'accès ancre n'est pas utilisé pour des questions de mobilité.

Dès que le terminal est joignable à travers un noeud d'accès visité, un traitement spécifique est nécessaire qui doit permettre de déterminer quel noeud d'accès utiliser. Ce traitement est fait au niveau du noeud d'accès ancre qui est en coupure de l'ensemble des paquets du flux. Le noeud d'accès ancre maintient, pour chaque adresse IPv6 allouée à partir de son préfixe à un terminal donné, la liste des noeuds d'accès à travers lequel le terminal est joignable. La liste est mise à jour à partir des paquets montants envoyés par le mobile avec comme adresse source l'adresse IPv6 considérée. Ces paquets sont nécessairement délivrés au noeud d'accès ancre via un tunnel IP dont le noeud d'accès visité est l'initiateur.

Ainsi, lorsque le noeud d'accès ancre reçoit un paquet émis par un noeud d'accès dans un tunnel, il identifie le flux correspondant et met à jour si nécessaire le contexte du flux en enregistrant l'adresse du noeud d'accès visité. Un mécanisme de temporisation permet de conserver un noeud d'accès cible donné dans la liste uniquement pour un temps pré-déterminé. A l'expiration de ce temps, le noeud d'accès est supprimé de la liste par le noeud d'accès ancre. Le terminal doit donc s'assurer de la mise à jour régulière de la liste en émettant des paquets à partir des noeuds d'accès cibles sur lesquels il est attaché.

Dans ce cas, ce premier paquet émis par le terminal vers le noeud d'accès ancre joue le rôle d'un paquet d'initialisation du routage du flux vers le noeud d'accès visité. Ce paquet assure donc la fonction d'initialisation et permet la mise à jour des tables de routage de flux.

La liste des noeuds d'accès étant maintenue par adresse IPv6 au niveau du noeud d'accès ancre, le mobile peut considérer que dès lors qu'il a émit un paquet montant à partir d'un noeud d'accès visité, le noeud d'accès ancre met à jour le contexte correspondant. Lorsqu'il doit déclarer un attachement valide auprès du noeud d'accès ancre alors qu'il n'a pas besoin d'émettre de paquet montant avec l'adresse source correspondante, le terminal se contente d'émettre un paquet IPv6 vide à destination du noeud d'accès ancre. Ce paquet est routé à travers un tunnel du noeud d'accès visité au noeud d'accès ancre, ce qui permet à celui-ci de mettre à jour son contexte. Dans les deux cas, ce premier paquet émis à destination du noeud d'accès ancre est un paquet permettant la mise à jour d'un noeud d'accès visité auprès du noeud d'accès ancre, c'est-à-dire qu'il assure l'initialisation du routage. Soit ce paquet correspond à un paquet à émettre, soit c'est un paquet vide dont la seule fonction est de mettre à jour le noeud d'accès visité auprès du noeud d'accès ancre. Il s'agit donc d'un paquet de mise à jour à proprement parlé.

Le noeud d'accès ancre doit être en mesure de supprimer les noeuds d'accès visités de la liste liée à chaque adresse IPv6 allouée. La suppression d'un noeud d'accès visité se fait soit à l'expiration d'une temporisation, soit à l'initiative du noeud d'accès visité.

En effet, les noeuds d'accès visités sont en mesure de déterminer lorsqu'ils perdent l'attachement d'un terminal donné (perte de connectivité de niveau 2) et d'en informer les noeuds d'accès ancres des flux du terminal.

Afin de le faire, un noeud d'accès visité qui perd la connectivité avec un terminal construit et émet un paquet à travers le tunnel maintenu avec chaque noeud d'accès ancre des flux de ce terminal. Chaque paquet a pour adresse source l'adresse du noeud d'accès visité et pour adresse destination l'adresse du terminal valide dans le sous réseau du noeud d'accès ancre et ne transporte pas de données. Etant donné qu'il est transmis dans un tunnel, il est encapsulé (sous la forme d'un paquet de transit) avec pour adresses source et destination les adresses du noeud d'accès visité et du noeud d'accès ancre. A la réception d'un tel paquet de transit, le noeud d'accès ancre détecte que l'adresse source du paquet encapsulé est l'extrémité du tunnel (le noeud d'accès visité), et l'adresse destination celle du terminal préalablement localisé dans ce même noeud d'accès visité. Il vérifie que ce paquet ne transporte pas de données et en déduit que c'est un paquet de signalisation indiquant que le terminal n'est plus joignable via le noeud d'accès visité. Il supprime donc ce noeud d'accès de la liste des noeuds sur lesquels le terminal est joignable et détruit le paquet vide bien qu'il apparaisse comme destiné au terminal mobile.

### 5.3 Structures de données

Chaque noeud d'accès maintient une liste des noeuds d'accès visités pour chaque adresse IPv6 allouée à un terminal dans son préfixe réseau. Chaque contexte identifie en fait la liste des noeuds d'accès visités pour les flux desquels le noeud d'accès est l'ancre. Cette liste contient les données suivantes :
- adresse IPv6 allouée dans le préfixe du noeud d'accès;
- liste des adresses IPv6 des noeuds d'accès visités correspondants.

Chaque noeud d'accès maintient un contexte pour chaque terminal connecté :
- identifiant du terminal (adresse MAC par exemple) ;
- adresses IPv6 utilisées par les flux du terminal.

La liste des adresses IPv6 permet de dériver les préfixes et adresses des noeuds d'accès ancres utilisés par les différents flux du terminal. Ces adresses sont utilisées lorsque le terminal perd la connectivité de niveau 2 pour générer les paquets indiquant aux noeuds d'accès ancres du terminal que celui-ci n'est plus joignable.

### 5.4 Protocole

Les protocoles standards IPv6 sont utilisés:
- entre un noeud d'accès ancre et un noeud correspondant sont émis des paquets IPv6 ;
- entre un noeud d'accès ancre et un noeud d'accès visité, les paquets IPv6 standard sont encapsulés dans des tunnels IPv6 ;
- deux types de paquets peuvent être émis spécifiquement pour les besoins de la solution, ce sont des paquets ne transportant pas de données :

- un paquet émis par un terminal sur un noeud d'accès visité à destination du noeud d'accès ancre correspondant à l'adresse IPv6 source. Ce paquet vise à s'assurer de la prise en compte du noeud d'accès visité dans la liste des noeuds d'accès utilisables maintenue au niveau du noeud d'accès ancre des flux correspondants ;
- un paquet émis par un noeud d'accès visité à destination d'un terminal et transmis au noeud d'accès ancre via le tunnel IP existant entre les deux noeuds d'accès. Ce paquet vise à indiquer au noeud d'accès ancre la perte de connectivité du terminal sur le noeud visité. Il est ensuite détruit par le noeud d'accès ancre.

### 5.5 Variante

Dans un mode de réalisation spécifique de l'invention, un noeud d'accès ancre peut de lui-même décider de router aux moins certaines des composantes du flux de communication au travers de noeuds d'accès visités par le terminal mobile. Une telle situation peut par exemple intervenir lorsque le terminal mobile peut activer simultanément plusieurs interfaces d'accès radio (par exemple WiFi, WiMax, GSM). Dans cette situation, le noeud d'accès ancre d'un flux est le noeud qui a initialisé ce flux. Il se peut cependant que le noeud d'accès ancre se rende compte, à l'aide de la liste des noeuds d'accès visités à sa disposition, qu'un de ces noeuds d'accès propose un débit plus important que lui-même ou encore une meilleure qualité de service ou de meilleures conditions de réception radio.

Dans une telle situation, le noeud d'accès ancre route les données qu'il devrait normalement transmettre directement au terminal vers le noeud d'accès visité le plus à même de fournir une qualité de service adéquat sous la forme d'une encapsulation.

Le noeud d'accès visité sélectionné décapsule les paquets et les transmet au terminal sur son interface radio. Ainsi, l'invention introduit une nouvelle manière de gérer les problématiques de qualité de service dans un réseau de communication mobile. De plus, la solution apportée par l'invention présente l'avantage d'être simple et économique.

## Revendications

1. Procédé de routage de données d'un flux de communication, lesdites données étant échangées entre un terminal mobile (101) d'un réseau de communication mobile à commutation de paquets et une entité distante (108), ledit procédé comprenant :
- une première étape d'attachement dudit terminal mobile (101), pour ledit flux de communication, à un premier point d'accès radio dudit réseau de communication mobile, dit noeud d'accès ancre (103) ;
- une étape d'acquisition, par ledit terminal mobile, d'une adresse globale de niveau réseau en fonction d'un préfixe d'adresse dudit noeud d'accès ancre (103) ;
- une deuxième étape d'attachement dudit terminal mobile (101) à un deuxième point d'accès radio dudit réseau de communication mobile, dit noeud d'accès visité courant (103'), en fonction d'un critère d'attachement prédéterminé ; et
- une étape de routage, par ledit noeud d'accès visité courant (103'), de données dudit flux de communication émises vers ladite entité distante (108) par ledit terminal mobile (101) en utilisant ladite adresse globale préalablement acquise ;
ledit procédé étant **caractérisé en ce qu'**il comprend en outre:
- une étape de sélection, par ledit noeud ancre, d'un noeud d'accès visité compris dans une liste de noeuds d'accès visités dont ledit noeud ancre dispose, ladite étape de sélection délivrant un noeud d'accès visité sélectionné; et
- une étape de routage, par ledit noeud ancre, de données dudit flux de communication entre l'entité distante et ledit terminal, via ledit noeud d'accès visité sélectionné.

2. Procédé de routage selon la revendication 1, **caractérisé en ce que** ledit procédé comprend, postérieurement à ladite deuxième étape d'attachement :
- une étape d'émission par ledit terminal mobile (101), d'au moins un paquet de données adressé à ladite entité distante (108), ledit paquet de données, dit paquet de mise à jour, déclenchant une mise à jour dudit attachement dudit terminal mobile (101) auprès dudit noeud d'accès ancre (103) ; et
- une étape de routage, par ledit noeud d'accès visité courant (103'), dudit au moins un paquet de mise à jour, vers ledit au moins un noeud d'accès ancre (103).

3. Procédé de routage selon la revendication 2, **caractérisé en ce que** ladite étape de routage dudit au moins un paquet de mise à jour comprend :
- une étape de réception, par ledit noeud d'accès visité courant (103'), dudit au moins un paquet de mise à jour ;
- une étape d'analyse d'un préfixe d'une adresse d'émission dudit au moins un paquet de mise à jour ; et
- lorsque ledit préfixe de ladite adresse d'émission ne correspond pas à un préfixe d'adresse dudit noeud d'accès visité courant (103'), une étape d'expédition dudit paquet de mise à jour vers ledit noeud d'accès ancre (103) en encapsulant ledit paquet de mise à jour dans un paquet de transit.

4. Procédé selon la revendication 3, **caractérisé en ce qu'**il comprend une étape de transmission de données en provenance de ladite entité distante (108), dites données descendantes, dudit noeud d'accès ancre (103) vers ledit noeud d'accès visité courant (103') en fonction dudit paquet de transit.

5. Procédé selon la revendication 4, **caractérisé en ce que** ladite étape de transmission comprend, au niveau dudit noeud d'accès ancre (103) :
- une étape de réception dudit paquet de transit en provenance dudit noeud d'accès visité courant (103') ;
- une étape de mise à jour d'un contexte de transmission dudit flux de communication en fonction d'un préfixe d'adresse dudit noeud d'accès visité courant (103') disponible au sein dudit paquet de transit ; et
- une étape de reroutage desdites données descendantes vers ledit noeud d'accès visité courant (103') tant que de telles données doivent être transmises, en fonction dudit contexte de transmission dudit flux.

6. Procédé selon la revendication 5, **caractérisé en ce que** ledit contexte de transmission dudit flux de communication comprend au moins une information de qualité de service relative à une interface radio utilisée pour transmettre au moins une partie desdites données composantes dudit flux de communication.

7. Procédé selon l'une quelconque des revendications 1 à 6, **caractérisé en ce que** lesdits noeuds d'accès dudit réseau de communication mobile forment un réseau mobile à commutation de paquets basé sur le protocole IP en version 6 et **en ce que** ladite adresse globale est une adresse IPv6.

8. Procédé selon l'une quelconque des revendications 1 à 7, **caractérisé en ce que** ledit critère d'attachement prédéterminé appartient au groupe comprenant au moins :
- une évolution de conditions de réception dans ledit terminal mobile (101) ;
- un niveau de charge de la batterie dudit terminal mobile (101) ;
- un besoin spécifique exprimé par une application logicielle dudit terminal mobile (101) ;
- une situation de mobilité ;
- une décision d'un utilisateur dudit terminal mobile (101) ;
- un niveau de signal reçu ;
- un taux d'erreur de transmission ; et
- un taux de retransmission de groupe de données (trames et/ou paquet).

9. Noeud d'accès radio d'un réseau de communication mobile, dit noeud d'accès ancre (103), comprenant :
- des moyens d'attachement d'au moins un terminal mobile (101) ;
- des moyens de routage de données d'un flux de communication entre une entité distante (108) et ledit terminal mobile (101) en utilisant une adresse globale préalablement construite par ledit terminal mobile (101) en utilisant un préfixe d'adresse dudit noeud d'accès ancre,
ledit noeud d'accès ancre étant **caractérisé en ce qu'**il comprend en outre:
- des moyens de sélection d'au moins un noeud d'accès visité, compris dans une liste de noeuds d'accès visités dont ledit noeud d'accès ancre dispose, lesdits moyens de sélection délivrant un noeud d'accès visité sélectionné ; et
- des moyens de routage de certaines composantes de données dudit flux de communication entre l'entité distante et ledit terminal via ledit noeud d'accès visité sélectionné.

10. Noeud d'accès d'un réseau de communication mobile selon la revendication 9, **caractérisé en ce qu'**il comprend des moyens de réception d'un paquet de mise à jour.

11. Noeud d'accès d'un réseau de communication mobile selon la revendication 9, **caractérisé en ce qu'**il comprend :
- des moyens de réception d'un paquet de transit en provenance d'un noeud d'accès visité courant (103') auquel ledit terminal mobile (101) est attaché ;
- des moyens de mise à jour d'un contexte de transmission dudit flux de communication en fonction d'un préfixe d'adresse dudit noeud d'accès visité courant (103') disponible au sein dudit paquet de transit ; et
- des moyens de reroutage de données en provenance de ladite entité distante (108) vers ledit noeud d'accès visité courant (103') tant que de telles données doivent être transmises, en fonction dudit contexte de transmission dudit flux.

12. Réseau de communication mobile, **caractérisé en ce qu'**il comprend au moins un noeud d'accès radio (103, 103') selon l'une quelconque des revendications 9 à 11.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de routage selon l'une au moins des revendications 1 à 8, lorsqu'il est exécuté sur un ordinateur.

## Patentansprüche

1. Verfahren zum Lenken von Daten eines Kommunikationsstroms, wobei die Daten zwischen einem mobilen Endgerät (101) eines Mobilkommunikationsnetzes mit Paketvermittlung und einer entfernten Entität (108) ausgetauscht werden, wobei das Verfahren Folgendes umfasst:
- einen ersten Schritt des Bindens des mobilen Endgeräts (101) für den Kommunikationsstrom an einen ersten Funkzugriffspunkt des Mobilkommunikationsnetzes, der Ankerzugriffsknoten (103) genannt wird;
- einen Schritt des Erfassens durch das mobile Endgerät einer globalen Adresse auf Netzebene als Funktion eines Adresspräfixes des Ankerzugriffsknotens (103) ;
- einen zweiten Schritt des Bindens des mobilen Endgeräts (101) an einen zweiten Funkzugriffspunkt des Mobilkommunikationsnetzes, der aktueller besuchter Zugriffsknoten (103') genannt wird, als Funktion eines vorgegebenen Bindekriteriums; und
- einen Schritt des Lenkens durch den aktuellen besuchten Zugriffsknoten (103') von Daten des Kommunikationsstroms, die von dem mobilen Endgerät (101) zu der entfernten Entität (108) gesendet werden, unter Verwendung der im Voraus erfassten globalen Adresse;
wobei das Verfahren **dadurch gekennzeichnet ist, dass** es außerdem Folgendes umfasst:
- einen Schritt des Auswählens durch den Ankerknoten eines besuchten Zugriffsknotens, der in einer Liste besuchter Zugriffsknoten enthalten ist, die der Ankerknoten einrichtet, wobei der Auswahlschritt einen ausgewählten besuchten Zugriffsknoten liefert; und
- einen Schritt des Lenkens durch den Ankerknoten von Daten des Kommunikationsstroms zwischen der entfernten Entität und dem Endgerät über den ausgewählten besuchten Zugriffsknoten.

2. Lenkungsverfahren nach Anspruch 1, **dadurch gekennzeichnet, dass** das Verfahren nach dem zweiten Bindeschritt Folgendes umfasst:
- einen Schritt des Sendens durch das mobile Endgerät (101) wenigstens eines Datenpakets, das an die entfernte Entität (108) adressiert ist, wobei das Datenpaket, das Aktualisierungspaket genannt wird, eine Aktualisierung der Bindung des mobilen Endgeräts (101) an dem Ankerzugriffsknoten (103) auslöst; und
- einen Schritt des Lenkens durch den aktuellen besuchten Zugriffsknoten (103') des wenigstens einen Aktualisierungspakets zu dem wenigstens einen Ankerzugriffsknoten (103).

3. Lenkungsverfahren nach Anspruch 2, **dadurch gekennzeichnet, dass** der Schritt des Lenkens des wenigstens einen Aktualisierungspakets Folgendes umfasst:
- einen Schritt des Empfangens durch den aktuellen besuchten Zugriffsknoten (103') des wenigstens einen Aktualisierungspakets;
- einen Schritt des Analysierens eines Präfixes einer Sendeadresse des wenigstens einen Aktualisierungspakets; und
- dann, wenn das Präfix der Sendeadresse keinem Adresspräfix des aktuellen besuchten Zugriffsknotens (103') entspricht, einen Schritt des Lieferns des Aktualisierungspakets an den Ankerzugriffsknoten (103) durch Einkapseln des Aktualisierungspakets in ein Transitpaket.

4. Verfahren nach Anspruch 3, gekennzeichnet, dass es einen Schritt des Übertragens von Daten, die von der entfernten Entität (108) stammen und Abwärtsstreckendaten genannt werden, von dem Ankerzugriffsknoten (103) zu dem aktuellen besuchten Knoten (103') als Funktion des Transitpakets umfasst.

5. Verfahren nach Anspruch 4, **dadurch gekennzeichnet, dass** der Übertragungsschritt auf Höhe des Ankerzugriffsknotens (103) Folgendes umfasst:
- einen Schritt des Empfangens des Transitpakets, das von dem aktuellen besuchten Zugriffsknoten (103') stammt;
- einen Schritt des Aktualisierens eines Übertragungskontexts des Kommunikationsstroms als Funktion eines Adresspräfixes des aktuellen besuchten Zugriffsknotens (103'), das in dem Transitpaket verfügbar ist; und
- einen Schritt des erneuten Lenkens der Abwärtsstreckendaten zu dem aktuellen besuchten Zugriffsknoten (103'), solange solche Daten übertragen werden müssen, als Funktion des Übertragungskontextes des Stroms.

6. Verfahren nach Anspruch 5, **dadurch gekennzeichnet, dass** der Übertragungskontext des Kommunikationsstroms wenigstens Dienstqualitätsinformationen bezüglich einer Funkschnittstelle, die verwendet wird, um wenigstens einen Teil der Daten, die den Kommunikationsstrom aufbauen, zu übertragen, enthält.

7. Verfahren nach einem der Ansprüche 1 bis 6, **dadurch gekennzeichnet, dass** die Zugriffsknoten des Mobilkommunikationsnetzes ein mobiles Netz mit Paketvermittlung auf der Basis des IP-Protokolls in der Version 6 bilden und dass die globale Adresse eine IPv6-Adresse ist.

8. Verfahren nach einem der Ansprüche 1 bis 7, **dadurch gekennzeichnet, dass** das vorgegebene Bindungskriterium zu der Gruppe gehört, die wenigstens Folgendes umfasst:
- eine Entwicklung von Empfangsbedingungen in dem mobilen Endgerät (101);
- einen Ladungsgrad der Batterie des mobilen Endgeräts (101);
- einen besonderen Bedarf, der durch eine Software-Anwendung des mobilen Endgeräts (101) ausgedrückt wird;
- eine Mobilitätssituation;
- eine Entscheidung eines Anwenders des mobilen Endgerät (101);
- einen Empfangssignalpegel;
- einen Fehleranteil der Übertragung; und
- einen Anteil der erneuten Übertragung einer Datengruppe (Rahmen und/oder Paket).

9. Funkzugriffsknoten eines mobilen Kommunikationsnetzes, der Ankerzugriffsknoten (103) genannt wird und Folgendes umfasst:
- Mittel zum Binden wenigstens eines mobilen Endgerät (101);
- Mittel zu Lenken von Daten eines Kommunikationsstroms zwischen einer entfernten Entität (108) und dem mobilen Endgerät (101) unter Verwendung einer globalen Adresse, die im Voraus durch das mobile Endgerät (101) unter Verwendung eines Adresspräfixes des Ankerzugriffsknotens konstruiert worden ist,
wobei der Ankerzugriffsknoten **dadurch gekennzeichnet ist, dass** er außerdem Folgendes umfasst:
- Mittel zum Auswählen wenigstens eines besuchten Zugriffsknotens, der in einer Liste besuchter Zugriffsknoten enthalten ist, die der Ankerzugriffsknoten einrichtet, wobei die Auswahlmittel einen ausgewählten besuchten Zugriffsknoten liefern; und
- Mittel zum Lenken bestimmter Komponenten von Daten des Kommunikationsstroms zwischen der entfernten Entität und dem Endgerät über den ausgewählten gesuchten Zugriffsknoten.

10. Zugriffsknoten eines Mobilkommunikationsnetzes nach Anspruch 9, **dadurch gekennzeichnet, dass** er Mittel zum Empfangen eines Aktualisierungspakets umfasst.

11. Zugriffsknoten eines Mobilkommunikationsnetzes nach Anspruch 9, **dadurch gekennzeichnet, dass** er Folgendes umfasst:
- Mittel zum Empfangen eines Transitpakets, das von einem aktuellen besuchten Zugriffsknoten (103'), an das das mobile Endgerät (101) gebunden ist, stammt;
- Mittel zu Aktualisieren eines Übertragungskontexts des Kommunikationsstroms als Funktion eines Adresspräfixes des aktuellen besuchten Zugriffsknoten (103'), das in dem Transitpaket verfügbar ist; und
- Mittel zum erneuten Lenken von Daten, die von der entfernten Entität (108) stammen, zu dem aktuellen besuchten Zugriffsknoten (103'), solange solche Daten übertragen werden müssen, als Funktion des Übertragungskontexts des Stroms.

12. Mobilkommunikationsnetz, **dadurch gekennzeichnet, dass** es wenigstens einen Funkzugriffsknoten (103, 103') nach einem der Ansprüche 9 bis 11 umfasst.

13. Computerprogrammprodukt, das von einen Kommunikationsnetz ferngeladen und/oder auf einem computerlesbaren Träger gespeichert und/oder durch einen Mikroprozessor abgearbeitet werden kann, **dadurch gekennzeichnet, dass** es Programmcodebefehle für die Ausführung des Lenkungsverfahrens nach einem der Ansprüche 1 bis 8, wenn es durch einen Computer abgearbeitet wird, umfasst.

## Claims

1. Method for routing data of a communication flow, said data being exchanged between a mobile terminal (101) of a packet switching mobile communication network and a remote entity (108), said method comprising:
- a first step of attachment of said mobile terminal (101), for said communication flow, to a first radio access point of said mobile communication network, termed the anchor access node (103);
- a step of acquisition, by said mobile terminal, of a network level global address as a function of an address prefix of said anchor access node (103);
- a second step of attachment of said mobile terminal (101) to a second radio access point of said mobile communication network, termed the current visited access node (103'), as a function of a predetermined attachment criterion; and
- a step of routing, by said current visited access node (103'), of data of said communication flow sent to said remote entity (108) by said mobile terminal (101) using said previously acquired global address;
said method being **characterized in that** it furthermore comprises:
- a step of selection, by said anchor node, of a visited access node included in a list of visited access nodes at the disposal of said anchor node, said selection step delivering a selected visited access node; and
- a step of routing, by said anchor node, of data of said communication flow between the remote entity and said terminal, via said selected visited access node.

2. Routing method according to Claim 1, **characterized in that** it comprises, subsequent to said second attachment step:
- a step of sending by said mobile terminal (101) of at least one data packet addressed to said remote entity (108), said data packet, termed the update packet, triggering an update of said attachment of said mobile terminal (101) with said anchor access node (103); and
- a step of routing, by said current visited access node (103'), of said at least one update packet, to said at least one anchor access node (103).

3. Routing method according to Claim 2, **characterized in that** said step of routing said at least one update packet comprises:
- a step of reception, by said current visited access node (103'), of said at least one update packet;
- a step of analyzing a prefix of a send address for said at least one update packet; and
- when said prefix of said send address does not correspond to an address prefix of said current visited access node (103'), a step of forwarding said update packet to said anchor access node (103) while encapsulating said update packet in a transit packet.

4. Method according to Claim 3, **characterized in that** it comprises a step of transmitting data originating from said remote entity (108), termed downstream data, from said anchor access node (103) to said current visited access node (103') as a function of said transit packet.

5. Method according to Claim 4, **characterized in that** said transmission step comprises, at the level of said anchor access node (103):
- a step of receiving said transit packet originating from said current visited access node (103');
- a step of updating a context of transmission of said communication flow as a function of an address prefix of said current visited access node (103') available within said transit packet; and
- a step of rerouting said downstream data to said current visited access node (103') as long as such data has to be transmitted, as a function of said context of transmission of said flow.

6. Method according to Claim 5, **characterized in that** said context of transmission of said communication flow comprises at least one item of information regarding quality of service relating to a radio interface used to transmit at least part of said component data of said communication flow.

7. Method according to any one of Claims 1 to 6, **characterized in that** said access nodes of said mobile communication network form a packet switching mobile network based on the IP version-6 protocol and **in that** said global address is an IPv6 address.

8. Method according to any one of Claims 1 to 7, **characterized in that** said predetermined attachment criterion belongs to the group comprising at least:
- an alteration of conditions of reception in said mobile terminal (101);
- a level of charge of the battery of said mobile terminal (101);
- a specific need expressed by a software application of said mobile terminal (101);
- a mobility situation;
- a decision of a user of said mobile terminal (101) ;
- a level of received signal;
- a transmission error rate; and
- a data (frames and/or packet) group retransmission rate.

9. Radio access node of a mobile communication network, termed the anchor access node (103), comprising:
- means of attachment of at least one mobile terminal (101); and
- means for routing data of a communication flow between a remote entity (108) and said mobile terminal (101) using a global address previously constructed by said mobile terminal (101) using an address prefix of said anchor access node,
said anchor access node being **characterized in that** it furthermore comprises:
- means for selecting at least one visited access node, included in a list of visited access nodes at the disposal of said anchor access node, said selecting means delivering a selected visited access node; and
- means for routing certain components of data of said communication flow between the remote entity and said terminal via said selected visited access node.

10. Access node of a mobile communication network according to Claim 9, **characterized in that** it comprises means for receiving an update packet.

11. Access node of a mobile communication network according to Claim 9, **characterized in that** it comprises:
- means for receiving a transit packet originating from a current visited access node (103') to which said mobile terminal (101) is attached;
- means for updating a context of transmission of said communication flow as a function of an address prefix of said current visited access node (103') available within said transit packet; and
- means for rerouting data originating from said remote entity (108) to said current visited access node (103') as long as such data has to be transmitted, as a function of said context of transmission of said flow.

12. Mobile communication network, **characterized in that** it comprises at least one radio access node (103, 103') according to any one of Claims 9 to 11.

13. Computer program product downloadable from a communication network and/or stored on a support readable by computer and/or executable by a microprocessor, **characterized in that** it comprises program code instructions for the execution of the routing method according to at least one of Claims 1 to 8, when it is executed on a computer.
